(19)

Europäisches Patentamt
European Patent Office
Office européen des brevets

(11)  EP 4 435 902 A1

(12)  EUROPEAN PATENT APPLICATION
published in accordance with Art. 153(4) EPC

(43) Date of publication:
    25.09.2024  Bulletin 2024/39

(51) International Patent Classification (IPC):
    H01M 4/86 (2006.01)          H01M 8/1004 (2016.01)
    H01M 8/10 (2016.01)

(21) Application number: 22901667.0

(22) Date of filing: 23.11.2022

(52) Cooperative Patent Classification (CPC):
    H01M 4/86; H01M 8/10; H01M 8/1004; Y02E 60/50

(86) International application number:
    PCT/KR2022/018650

(87) International publication number:
    WO 2023/101309 (08.06.2023 Gazette 2023/23)

(84) Designated Contracting States:
    AL AT BE BG CH CY CZ DE DK EE ES FI FR GB
    GR HR HU IE IS IT LI LT LU LV MC ME MK MT NL
    NO PL PT RO RS SE SI SK SM TR
    Designated Extension States:
    BA
    Designated Validation States:
    KH MA MD TN

(30) Priority:  30.11.2021  KR 20210169401

(71) Applicant: Kolon Industries, Inc.
    Seoul 07793 (KR)

(72) Inventors:
    • KIM, Jung Ho
      Seoul 07793 (KR)
    • KIM, Jun Young
      Seoul 07793 (KR)

    • SONG, Kah Young
      Seoul 07793 (KR)
    • KONG, Nak Won
      Seoul 07793 (KR)
    • LEE, Eun Su
      Seoul 07793 (KR)
    • KIM, Hyeong Su
      Seoul 07793 (KR)
    • LEE, Ju Sung
      Seoul 07793 (KR)
    • NAM, Kyoung Sik
      Seoul 07793 (KR)
    • PARK, Chan Mi
      Seoul 07793 (KR)

(74) Representative: Ter Meer Steinmeister & Partner
    Patentanwälte mbB
    Nymphenburger Straße 4
    80335 München (DE)

(54)  **CATALYST FOR FUEL CELL, PREPARATION METHOD THEREFOR, CATALYST LAYER INCLUDING SAME, MEMBRANE-ELECTRODE ASSEMBLY, AND FUEL CELL**

(57)    A catalyst for a fuel cell with improved durability is provided. A catalyst for a fuel cell according to the present disclosure comprises a second composite in which a plurality of first composites comprising a support and metal catalyst particles supported on the support, are aggregated and a nitrogen-containing protective layer coated on the surface of the second composite.

## FIG.1

**Description**

**[TECHNICAL FIELD]**

The present disclosure relates to a catalyst for a fuel cell, a preparation method therefor, a catalyst layer including the same, a membrane-electrode assembly, and a fuel cell, and more specifically to a catalyst for a fuel cell with improved durability through a nitrogen-containing protective layer formed on the surface, a preparation method therefor, a catalyst layer comprising the same, a membrane-electrode assembly, and a fuel cell.

**[BACKGROUND ART]**

A fuel cell is a battery equipped with a power generation system that directly converts chemical reaction energy, such as an oxidation/reduction reaction of hydrogen and oxygen contained in hydrocarbon-based fuel materials (*e.g.,* methanol, ethanol, and natural gas), into electrical energy. Due to the characteristics of high energy efficiency and environment-friendly with low emissions of pollutants, the fuel cell is attracting attention as a next-generation clean energy source that can replace fossil energy.

Such a fuel cell has an advantage in that it can generate a wide range of outputs in a stack configuration by stacking unit cells, and has been highlighted as a small and mobile portable power source because it shows an energy density 4 to 10 times higher than that of a small lithium battery.

A stack that substantially generates electricity in a fuel cell is a stack of several to dozens of unit cells consisting of a membrane-electrode assembly (MEA) and a separator (also called a bipolar plate), and the membrane-electrode assembly generally has a structure in which an anode (or a fuel electrode) and a cathode electrode (a cathode, or an air electrode) are respectively formed on both sides with the electrolyte membrane disposed therebetween.

Fuel cells can be classified into alkaline electrolyte membrane fuel cells, polymer electrolyte membrane fuel cells (PEMFC), *etc.* according to the state and type of electrolyte, and among them, the polymer electrolyte membrane fuel cells, due to advantages, such as a low operating temperature of below 100°C, fast start-up and response characteristics, excellent durability, *etc.,* has been highlighted as a portable power supply and power supplies for vehicles and home.

Representative examples of the polymer electrolyte membrane fuel cells include a proton exchange membrane fuel cell (PEMFC) that uses hydrogen gas as fuel, a direct methanol fuel cell (DMFC) that uses liquid methanol as fuel, *etc.*

Summarizing the reactions occurring in the polymer electrolyte membrane fuel cell, first, when a fuel such as hydrogen gas is supplied to the anode electrode, hydrogen ions ($H^+$) and electrons ($e^-$) are generated by the oxidation reaction of the hydrogen gas at the anode electrode. The hydrogen ions generated are transferred to the cathode electrode through the polymer electrolyte membrane, and the electrons generated are transferred to the cathode electrode through an external circuit. Oxygen gas is supplied from the cathode electrode, and oxygen is combined with hydrogen ions and electrons to generate water by a reduction reaction of oxygen.

In particular, in the fuel cell reaction process as described above, the metal catalyst particles used in the catalyst layer become metal catalyst particle ions not only hinder the movement of hydrogen ions, but also are deposited on other metal catalyst particles and thereby grow the particle size, that is, induction of Ostwald ripening phenomenon. As a result, a phenomenon in which the metal catalyst particles fall off from the support occurs, which causes a problem of accelerating deterioration of the electrodes. Besides, there was an additional problem such as degradation of the durability of the catalyst layer, such as corrosion of the support on which the metal catalyst particles are supported).

**[DETAILED DESCRIPTION OF INVENTION]**

**[TECHNICAL PROBLEMS]**

In order to solve the above problems, an object of the present disclosure is to provide a catalyst for a fuel cell with improved durability by preventing detachment, dissolution, aggregation, and growth of metal catalyst particles in order to solve the above problems.

Another object of the present disclosure is to provide a method for preparing a catalyst for a fuel cell capable of realizing the catalyst for a fuel cell.

Still another object of the present disclosure is to provide a catalyst layer including the catalyst for a fuel cell.

Still another object of the present disclosure is to provide a membrane-electrode assembly including the catalyst layer.

Still another object of the present disclosure is to provide a fuel cell including the membrane-electrode assembly.

The objects of the present disclosure are not limited to the above-mentioned objects, and other objects and advantages of the present disclosure not mentioned above can be understood by the following description and will be more clearly understood by the examples of the present disclosure. Additionally, it will also be readily apparent that the objects and advantages of the present disclosure may be realized by means of the means and combinations thereof indicated in the claims.

**[TECHNICAL SOLUTION]**

In order to achieve the above objects, in an embodiment, the present disclosure provides a catalyst for a fuel cell which includes a second composite in which a plurality of first composites comprising a support and metal catalyst particles supported on the support, are aggregated; and a nitrogen-containing protective layer coated on the surface of the second composite.

**[EFFECT OF INVENTION]**

According to an aspect of the present disclosure, a catalyst layer with improved durability is provided, and accordingly, problems such as detachment, dissolution, aggregation, and growth of metal catalyst particles and corrosion of a support can be solved at once. As a result, the life of a fuel cell can be extended.
In addition to the above effects, specific effects of the present disclosure will be described together while describing specific details for carrying out the present disclosure.

**[BRIEF DESCRIPTION OF THE DRAWING]**

FIG. 1 shows a catalyst for a fuel cell according to an embodiment of the present disclosure.
FIG. 2 shows a schematic diagram illustrating a method for preparing a catalyst for a fuel cell according to an embodiment of the present disclosure.
FIG. 3 shows a cross-sectional view illustrating a membrane-electrode assembly according to an embodiment of the present disclosure.
FIG. 4 shows a schematic diagram for illustrating a fuel cell according to an embodiment of the present disclosure.
FIG. 5 shows scanning electron microscope (SEM) images of the surface of the catalyst layer according to Example 1 and Reference Example 1.
FIG. 6 shows transmission electron microscope (TEM) images of the catalyst for a fuel cell according to Example 1 and Reference Example 1.
FIG. 7 shows performance evaluation of membrane-electrode assemblies according to Comparative Example 1, Reference Example 1, and Example 1.

**[BEST MODE]**

Hereinafter, each configuration of the present disclosure will be described in more detail so that those skilled in the art can easily practice the same, but these are merely exemplary embodiments and the scope of rights of the present disclosure is not limited.
In an embodiment, the present disclosure provides a catalyst for a fuel cell which includes a second composite in which a plurality of first composites comprising a support and metal catalyst particles supported on the support are aggregated; and a nitrogen-containing protective layer coated on the surface of the second composite.
Hereinafter, the configuration of the present disclosure will be described in more detail.

**1. Catalyst for fuel cell and preparation method thereof**

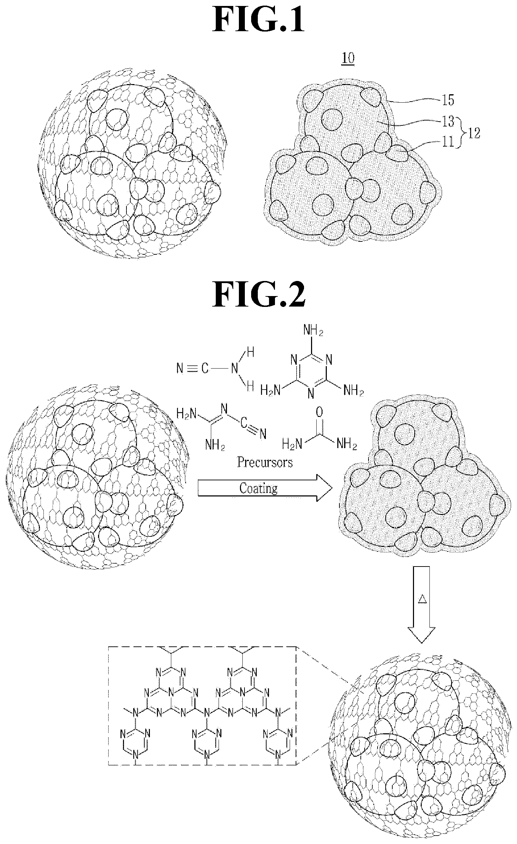

FIG. 1 shows a catalyst for a fuel cell according to an embodiment of the present disclosure.
Referring to FIG. 1, the catalyst 10 for a fuel cell according to the present disclosure may include a plurality of first composites 12 (primary particles). Additionally, several of the first composites may be aggregated to form a second composite (secondary particle). As the catalyst for a fuel cell 10, any catalyst that can be used as a catalyst for the oxidation reaction of hydrogen gas and/or the reduction reaction of oxygen gas may be used.
The first composite 12 according to the present disclosure may include a support 13 and metal catalyst particles 11 supported on the support 13.
The support 13 is one which facilitates electron exchange with a catalyst, increases the active area by increasing the dispersibility of metal catalyst particles from the structure, and facilitates mass transfer, and it may correspond to one selected from the group consisting of carbon-based supports, porous inorganic oxides, zeolites, and a combination thereof.

The carbon-based support may be selected from graphite, Super P, carbon fiber, carbon sheet, carbon black, Ketjen black, Denka black, acetylene black, carbon nanotube (CNT), carbon sphere, carbon ribbon, fullerene, activated carbon, carbon nano fiber, carbon nano wire, carbon nano ball, carbon nano horn, carbon nano cage, carbon nanoring, ordered nano-/mesoporous carbon, carbon aerogel, mesoporous carbon, graphene, stabilized carbon, activated carbon, and combinations of at least one or more, but is not limited thereto, and supports that can be used in the art may be used without limitation.

The porous inorganic oxide may correspond to at least one selected from the group consisting of zirconia, alumina, titania, silica, and ceria.

The support preferably has a surface area of 50 $m^2$/g or more, and preferably has an average particle diameter of 10 nm to 300 nm. When the surface area of the support is less than the above numerical range, uniform distribution of the metal catalyst particles cannot be obtained.

The metal catalyst particle 11 according to the present disclosure may correspond to a platinum-based metal or non-platinum-based metal. The metal catalyst particles 11 may be disposed on the surface of the support 13 or may correspond to one which have penetrated into the support 13 while filling internal pores of the support 13.

As the platinum-based metal, platinum (Pt) and/or a platinum-based alloy (Pt-M) may be used. M may be any one selected from the group consisting of palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), and rhodium (Rh).

Specifically, as the platinum-based alloy (Pt-M), Pt-Pd, Pt-Sn, Pt-Mo, Pt-Cr, Pt-W, Pt-Ru, Pt-Ni, Pt-Co, Pt-Y, Pt-Ru-W, Pt-Ru-Ni, Pt-Ru-Mo, Pt-Ru-Rh-Ni, Pt-Ru-Sn-W, Pt-Ru-Ir-Ni, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, or a mixture of two or more of these may be used.

As the non-platinum based metal, one or more selected from the group consisting of palladium (Pd), ruthenium (Ru), iridium (Ir), osmium (Os), and a non-platinum based alloy may be used.

As the non-platinum based metal, Ir-Fe, Ir-Ru, Ir-Os, Co-Fe, Co-Ru, Co-Os, Rh-Fe, Rh-Ru, Rh-Os, Ir-Ru-Fe, Ir-Ru-Os, Rh-Ru-Fe, Rh-Ru-Os, Fe-N, Fe-P, Co-N, or a mixture of two or more of these may be used.

The nitrogen-containing protective layer 15 according to the present disclosure may be one coated on the surface of the second composite (secondary particle) in which the first composite 12 are aggregated. Specifically, the nitrogen-containing protective layer 15 may be one derived from a nitrogen precursor.

Conventionally, since a catalyst for a fuel cell consists of only the second composite, metal catalyst particles become metal catalyst particle ions during the operation of the fuel cell and are dissolved, and deposited on other metal catalyst particles to thereby induce a phenomenon of growing the particle size (Oswald ripening) and a phenomenon of aggregating metal catalyst particles. As a result, a phenomenon in which the metal catalyst particles fall off from the support occurs, which then accelerates the deterioration of the electrodes and causes corrosion of the support. According to the present disclosure, by coating the nitrogen-containing protective layer on the surface of the second composite, not only it is possible to prevent the support from being corroded but also it is possible to prevent the metal catalyst particles from being dissolved or sintered, thereby being capable of significantly improving durability of the catalyst for a fuel cell.

The nitrogen precursor may include any one selected from the group consisting of cyanamide, urea, melamine, 2-cyanoguanidine, and a combination thereof.

The average size of the second composite may be 90 nm to 500 nm, preferably 100 nm to 450 nm, and more preferably 110 nm to 400 nm.

The thickness of the nitrogen-containing protective layer according to the present disclosure may be 5 nm to 70 nm, preferably 8 nm to 60 nm, and more preferably 10 nm to 50 nm. When the thickness of the nitrogen-containing protective layer is below the above range, the durability of the catalyst for a fuel cell may not be sufficiently improved, whereas when the thickness exceeds the above range, the nitrogen-containing protective layer may become too thick thereby deteriorating the performance of the catalyst.

The nitrogen-containing protective layer 15 according to the present disclosure may include graphitic carbon nitride. Specifically, since the graphitic carbon nitride is chemically stable in most solvents, it can facilitate the process of preparing an electrode slurry by mixing the catalyst for a fuel cell and the ionomer. Additionally, since the graphitic carbon nitride consists of only carbon and nitrogen, it does not include any metal elements that may cause environmental problems. Therefore, according to the present disclosure, all of economic feasibility of materials, ease of processing, and an environment-friendly preparation process can be realized.

The nitrogen-containing protective layer 15 according to the present disclosure may be prepared using any one selected from the group consisting of a ball mill, a powder mixer, a resonant acoustic mixer (RAM), and a combination thereof, and preferably, it may be prepared using a resonant acoustic mixer (RAM).

When the nitrogen-containing protective layer is formed using a resonant acoustic mixer, there is an advantage in that the first composite and the nitrogen precursor can be evenly mixed in a short time with acoustic energy of low frequency and high intensity. As a result, the time required for the preparing process can be shortened and the economic feasibility of the process can be secured.

FIG. 2 shows a schematic diagram illustrating a method for preparing a catalyst for a fuel cell according to an embodiment of the present disclosure.

Referring to FIG. 2, the method for preparing a catalyst for a fuel cell according to an embodiment of the present disclosure includes: (S 1) preparing a first mixture by adding a first composite and a nitrogen precursor to a reaction container and stirring them; and; (S2) heat-treating the stirred first mixture. The first composite may include a support and metal catalyst particles supported on the support. The above-mentioned parts and repeated descriptions are briefly described or omitted.

The step (S 1) may be a step using any one selected from the group consisting of a ball mill, a powder mixer, a resonant acoustic mixer (RAM), and a combination thereof.

The (S2) step may include a first heat treatment step and a second heat treatment step which is different from the first heat treatment step. Specifically, the first heat treatment step may be a step of heat treatment at 150°C to 250°C for 0.5 to 3 hours in a first non-reactive gas atmosphere. The second heat treatment step may be heat treatment at 500°C to 600°C for 1 to 5 hours in a second non-reactive gas atmosphere. However, the technical concept of the present disclosure is not limited to the heat treatment step which is divided into two steps, and may include three or more heat treatment steps.

As described above, rapid growth of metal catalyst particles can be prevented by separately using the heat treatment step. In general, when the heat treatment steps are used without division, metal catalyst particles may grow excessively, which may cause a problem in that the amount supported on the support is lowered. According to an aspect of the present disclosure, it is preferable to divide the heat treatment step for the above reason. However, since a nitrogen-containing protective layer may be formed even when the heat treatment step is not divided, the technical concept of the present disclosure also corresponds thereto. According to another aspect of the present disclosure, by dividing the heat treatment step in the step (S2), a nitrogen-containing protective layer having a regular and uniform shape can be formed. For example, the thickness distribution of the nitrogen-containing protective layer according to an embodiment of the present disclosure can be analyzed by measuring the difference between the average thickness at various points and the thickness measured at each corresponding point of the nitrogen-containing protective layer using a transmission electron microscope (TEM) and then calculating the standard deviation (SD). For example, when the heat treatment step is divided in the (S2) step, the standard deviation of the thickness of the nitrogen-containing protective layer prepared may be 5 to 25, and more specifically 8 to 20. In contrast, when the heat treatment step is not divided in the step (S2), the standard deviation of the thickness of the nitrogen-containing protective layer prepared may be 30 to 50.

The first non-reactive gas and the second non-reactive gas may each independently be any one selected from the group consisting of nitrogen, argon, helium, and a combination thereof. In the present specification, the "non-reactive gas" is defined as a meaning encompassing a low-reactive or inert gas.

In the step (S1), the content of the nitrogen precursor may be 80 to 200 parts by weight, preferably 90 to 180 parts by weight, more preferably 100 to 160 parts by weight based on 100 parts by weight of the support. When the content of the nitrogen precursor is below the above numerical range, the thickness of the nitrogen-containing protective layer becomes too thin, and thus the effect of improving durability may be insignificant, whereas when the content exceeds the above numerical range, the nitrogen-containing protective layer becomes thick and thus the performance of the catalyst may deteriorate.

## 2. Catalyst layer and preparation method thereof

A catalyst layer according to another embodiment of the present disclosure may include the catalyst for a fuel cell and an ionomer. The above-mentioned parts and repeated descriptions are briefly described or omitted.

The content of the ionomer according to the present disclosure may be 20 to 60 parts by weight, preferably 25 to 55 parts by weight, and more preferably 30 to 50 parts by weight based on 100 parts by weight of the catalyst for a fuel cell (solid content). When the content of the ionomer is below the above numerical range, the performance of the fuel cell may be deteriorated, whereas when the content of the ionomer exceeds the above numerical range, mass transfer may be inhibited and thus the performance of the fuel cell may be deteriorated.

The ionomer according to the present disclosure is used as a binder and may include any one selected from the group consisting of fluorine-based ionomers, partial fluorine-based ionomers, hydrocarbon-based ionomers, and a mixture thereof.

The fluorine-based ionomer, being, for example, a fluorine-based polymer containing fluorine in the main chain, may be any one selected from the group consisting of polymers poly(perfluorosulfonic acid), poly(perfluorocarboxylic acid), a copolymer of tetrafluoroethylene and fluorovinyl ether containing a sulfonic acid group, and a mixture thereof.

The partially fluorine-based ionomer may be, for example, a polystyrene-graft-ethylenetetrafluoroethylene copolymer or a polystyrene-graft-polytetrafluoroethylene copolymer.

The hydrocarbon-based ionomer, for example, may be any one selected from the group consisting of sulfonated polyimide (S-PI), sulfonated polyarylethersulfone (S-PAES), sulfonated polyetheretherketone (S-PEEK), sulfonated polybenzimidazole (S-PBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and a mixture thereof.

A method for preparing a catalyst layer according to another embodiment of the present disclosure may include coating an electrode slurry on a substrate and drying the coated electrode slurry. As described above, the electrode slurry may include the catalyst for a fuel cell and an ionomer. The substrate may be a polymer electrolyte membrane or a gas diffusion layer.

## 3. Membrane-electrode assembly

Still another embodiment of the present disclosure is a membrane-electrode assembly which includes a polymer electrolyte membrane and the catalyst layer disposed on at least one surface of the polymer electrolyte membrane.

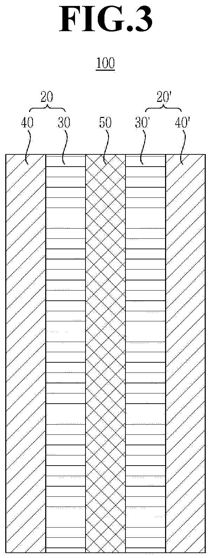

Hereinafter, the constitution of the present disclosure will be described in detail with reference to FIG. 3.

FIG. 3 is a cross-sectional view illustrating a membrane-electrode assembly according to an embodiment of the present disclosure.

Referring to FIG. 3, the membrane-electrode assembly 100 according to the present disclosure is a membrane-electrode assembly 100 including the polymer electrolyte membrane 50, and it includes an anode electrode 20 and a cathode electrode 20', which are positioned opposite to each other, and the polymer electrolyte membrane 50 positioned between the anode electrode 20 and the cathode electrode 20'.

The anode and cathode electrodes (20 and 20') include electrode substrates (40 and 40') and catalyst layers (30 and 30') formed on surfaces of the electrode substrates (40 and 40'), and may further include a microporous layer (not shown), which includes conductive fine particles (*e.g.,* carbon powder, carbon black, *etc.*) so as to facilitate diffusion of materials between the catalyst layers (30 and 30') and the electrode substrates (40 and 40').

The catalyst for a fuel cell according to the present disclosure may be applied to at least any one of the anode electrode and the cathode electrode (20, 20'), and specifically, to the catalyst layers (30, 30') formed on the surfaces of the electrode substrates (40, 40').

The polymer electrolyte membrane 50 may include an ion conductor. The ion conductor may be the same as or different from the ionomer applied to the catalyst layers described above.

According to another embodiment of the present disclosure, the polymer electrolyte membrane 50 may be a reinforced composite membrane including a porous support in which the ion conductor is impregnated. The reinforced composite membrane may include a first resin layer on a first surface of the porous support, and may include a second resin layer on a second surface opposite to the first surface of the porous support. The first resin layer and the second resin layer may include the ion conductor described above.

The porous support may be a fluorine-based support or a nanoweb support. Specifically, the fluorine-based support may correspond to, for example, expanded polytetrafluoroethylene (e-PTFE) having a microstructure of polymeric fibrils or a microstructure in which nodes are connected to one another by fibrils. Additionally, a film having a fine structure of polymeric fibrils without the nodes may also be used as the porous support.

The fluorine-based support may include a perfluorinated polymer. The porous support may correspond to a more porous and stronger porous support by extrusion molding of dispersion polymerization PTFE into a tape in the presence of a lubricant and stretching the thus-obtained material.

Additionally, the non-crystalline content of the PTFE may be increased by heat-treating the e-PTFE at a temperature exceeding the melting point of the PTFE (about 342°C). The e-PTFE film prepared by the above method may have micropores having various diameters and porosity. The e-PTFE film prepared by the above method may have pores of at least 35%, and the micropores may have a diameter of about 0.01 μm to about 1 μm.

The nanoweb support according to an embodiment of the present disclosure may be a non-woven fibrous web consisting of a plurality of randomly oriented fibers. The non-woven fibrous web refers to a sheet which has a structure of individual fibers or filaments that are interlaid, but not in the same way as a woven fabric. The non-woven fibrous web may be prepared by any one method selected from the group consisting of is carding, gameting, air-laying, wet-laying, melt blowing, spun bonding, and stitch bonding.

The fiber may include one or more polymer materials, and any fiber-forming polymer material may be used as long as it is generally used as such, and specifically, a hydrocarbon-based fiber-forming polymer material may be used. For example, the fiber-forming polymer material may include any one selected from the group consisting of polyolefins (*e.g.,* polybutylene, polypropylene, and polyethylene), polyesters (*e.g.,* polyethylene terephthalate and polybutylene terephthalate), polyamides (nylon-6 and nylon-6,6), polyurethane polybutene, polylactic acid, polyvinyl alcohol, polyphenylene sulfide, polysulfone, fluid crystalline polymers, polyethylene-co-vinylacetate, polyacrylonitrile, cyclic polyolefins, polyoxymethylene, polyolefin-based thermoplastic elastomers, and a combination thereof. However, the technical idea of the present disclosure is not limited thereto.

The nanoweb support according to an embodiment of the present disclosure may be a support, in which nanofibers are integrated in the form of a non-woven fabric including a plurality of pores.

The nanofiber exhibits excellent chemical resistance and has hydrophobicity, and thus can preferably be used as hydrocarbon-based polymers that are not subject to shape deformation by moisture in a high-humidity environment. Specifically, as the hydrocarbon-based polymer, any one selected from the group consisting of nylon, polyimide, polyaramid, polyetherimide, polyacrylonitrile, polyaniline, polyethylene oxide, polyethylene naphthalate, polybutylene terephthalate, styrene butadiene rubber, polystyrene, polyvinyl chloride, polyvinyl alcohol, polyvinylidene fluoride, polyvinyl butylene, polyurethane, polybenzoxazole, polybenzimidazole, polyamideimide, polyethylene terephthalate, polyphenylene sulfide, polyethylene, polypropylene, a copolymer thereof, and a mixture thereof, and among these, polyimide having more excellent heat resistance, chemical resistance, and shape stability may preferably be used.

The nanoweb support is an aggregate of nanofibers in which nanofibers prepared by electrospinning are randomly arranged. In particular, considering the porosity and thickness of the nanoweb, the nanofibers measured for 50 fiber diameters using a scanning electron microscope (JSM6700F, JEOL) and calculated from the average, it is desirable to have a diameter with an average of 40 nm to 5,000 nm.

When the average diameter of the nanofibers is below the above numerical range, the mechanical strength of the porous support may be reduced, whereas when the average diameter of the nanofibers exceeds the above numerical range, the porosity may be significantly decreased and the thickness may be increased.

The thickness of the non-woven fibrous web may be 10 $\mu$m to 50 $\mu$m, and specifically 15 $\mu$m to 43 $\mu$m. When the thickness of the non-woven fibrous web is below the above numerical range, the mechanical strength may decrease, whereas when the thickness exceeds the above numerical range, resistance loss may increase, and weight reduction and integration may decrease.

The non-woven fibrous web may have a basic weight of 5 mg/cm$^2$ to 30 mg/cm$^2$. When the basis weight of the non-woven fibrous web is below the above range, visible pores are formed, making it difficult to function as a porous support, whereas when the basis weight of the non-woven fibrous web exceeds the above numerical range, it may be prepared in the form of a paper or fabric in which pores are hardly formed.

The porous support according to the present disclosure may have a porosity of 30 % to 90%, and preferably 60 % to 85%. When the porosity of the porous support is below the above numerical range, impregnation property of the ion conductor may deteriorate, whereas when the porosity of the porous support exceeds the above numerical range, shape stability may deteriorate, and thus, subsequent processes may not proceed smoothly.

The porosity may be calculated by the ratio of the air volume in the porous support to the total volume of the porous support according to Equation 1 below. In particular, the total volume may be calculated by preparing a rectangular sample and measuring its width, length, and thickness, and the air volume may be obtained by measuring the mass of the sample and subtracting the polymer volume calculated from the density from the total volume.

[Equation 1]

$$\text{Porosity (\%)} = (\text{air volume in porous support/total volume of porous support}) \times 100$$

## 4. Fuel cell

Another embodiment of the present disclosure is a fuel cell including the membrane-electrode assembly.

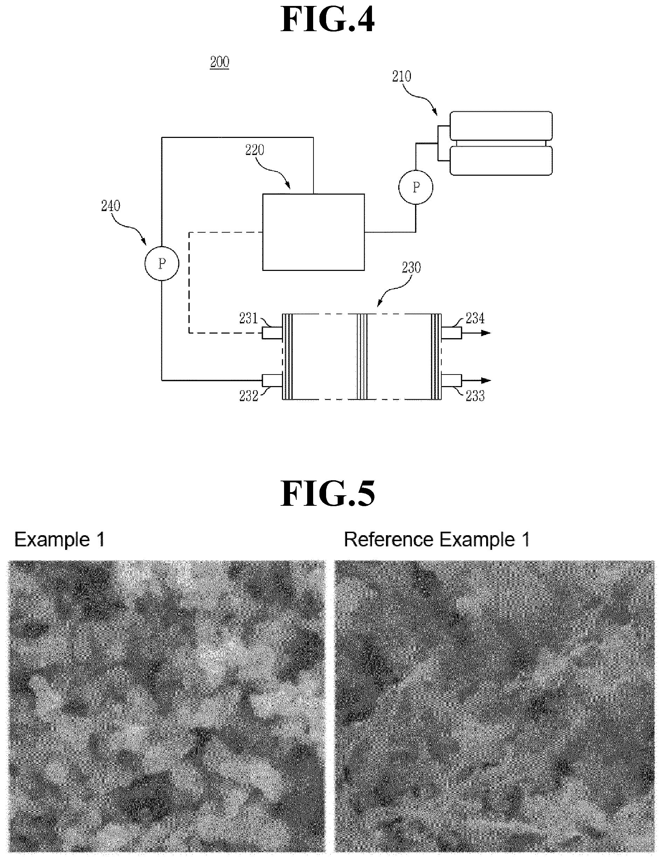

FIG. 4 shows a schematic diagram for illustrating a fuel cell according to an embodiment of the present disclosure.

Referring to FIG. 4, the fuel cell 200 according to the present disclosure may include a fuel supply unit 210, which supplies a mixed fuel in which fuel and water are mixed; a reforming unit 220, which reforms the mixed fuel to generate reformed gas containing hydrogen gas; a stack 230, in which the reformed gas containing hydrogen gas supplied from the reforming unit 220 causes an electrochemical reaction with an oxidizing agent to generate electrical energy; and an oxidizing agent supply unit 240, which transfers the oxidizing agent to the reforming unit 220 and the stack 230.

The stack 230 may be equipped with a plurality of unit cells which generate electrical energy by inducing an oxidation/reduction reaction between a reformed gas including hydrogen supplied from the reforming unit 220 and the oxidizing agent supplied from the oxidizing agent supplying unit 240.

Each unit cell, which refers to a unit cell that generates electricity, may include the membrane-electrode assembly for oxidizing/reducing the reformed gas containing hydrogen gas and oxygen in the oxidizing agent, and a separator (also called a bipolar plate, hereinafter referred to as "separator") for supplying a reformed gas containing hydrogen gas and the oxidizing agent to the membrane-electrode assembly. The separators are disposed on both sides of the membrane-electrode assembly with the membrane-electrode assembly placed at the center. In particular, the separators respectively located at the outermost side of the stack are also particularly called end plates.

Among the separators, the end plate may be equipped with a pipe-shaped first supply pipe 231 for injecting the reformed gas including hydrogen gas supplied from the reforming unit 220; and a pipe-shaped second supply pipe 232 for injecting oxygen gas; and the other end plate may be equipped with a first discharge pipe 233 for discharging reformed gas containing hydrogen gas, that is finally unreacted and remains in a plurality of unit cells, to the outside; and a second discharge pipe 234 for discharging the oxidizing agent, that is finally unreacted and remains in the unit cell, to the outside.

In the fuel cell, since the separator, the fuel supply unit, and the oxidizing agent supply unit constituting the electricity generation unit are used in a conventional fuel cell, a detailed description thereof will be omitted herein.

Hereinafter, embodiments of the present disclosure will be described in detail so that those skilled in the art can easily practice the same, but these are merely exemplary embodiments, and the scope of rights of the present disclosure is not limited thereto.

**[Preparation Example 1: Preparation of catalyst layer]**

Catalyst layers according to Comparative Examples and Examples were prepared.

**<Example 1>**

After adding 10 g of a commercially available Pt/C catalyst (a plurality of first composites) from Tanaka into a reaction container, 12 g of cyanamide was added thereto. Then, the mixture was stirred using a Resonant Acoustic Mixer (RAM) to prepare a first mixture. The first mixture was stirred while applying a gravitational acceleration of 80 g for 15 minutes in a frequency atmosphere of 60 Hz using a resonant acoustic mixer (RAM). The stirred first mixture was subjected to a first heat treatment at 250°C for 3 hours under a nitrogen atmosphere using a tube furnace, and the first heat-treated mixture was subjected to a second heat treatment at 600°C for 3 hours under a nitrogen atmosphere, and thereby a catalyst having a nitrogen-containing protective layer (g-$C_3N_4$, thickness: 30 nm) formed on the surface of the second composite (Pt/C) was finally prepared. Then, an electrode slurry was prepared by adding 45 parts by weight of an ion conductor dispersion (Nafion D-521) relative to 100 parts by weight of the catalyst (solid content) based on the solid content and a solvent. After coating the electrode slurry on a release film, it was dried at 60°C for 6 hours to prepare a catalyst layer according to Example 1.

**<Comparative Example 1>**

A catalyst mixture solution was prepared by adding 10 g of a commercially available Pt/C catalyst (a first composite) from Tanaka into a reaction container and mixing with a solvent. An electrode slurry was prepared by adding the catalyst (solid content) to 45 parts by weight of an ion conductor dispersion (Nafion D-521) as a binder based on 100 parts by weight of the solid content. After coating the electrode slurry on a release film, it was dried at 60°C for 6 hours to prepare a catalyst layer according to Comparative Example 1.

**<Reference Example 1>**

A catalyst layer was prepared in the same manner as in Example 1, but the first heat treatment was omitted and only the second heat treatment was performed.

**[Experimental Example 1: Surface SEM analysis of catalyst layers according to Example 1 and Reference Example 1]**

FIG. 5 shows scanning electron microscope (SEM) images of the surface of the catalyst layer according to Example 1 and Reference Example 1.

Referring to Example 1 in FIG. 5, it can be seen that a regular and uniform nitrogen-containing protective layer (a g-$C_3N_4$ layer) is formed on the surface of a first composite, and there is no change in the shape of the first composite. In contrast, referring to Reference Example 1, it can be seen that an irregular and bulky nitrogen-containing protective layer (a g-$C_3N_4$ layer) was formed on the surface of the first composite.

**[Experimental Example 2: TEM analysis of fuel cell catalysts according to Example 1 and Reference Example 1]**

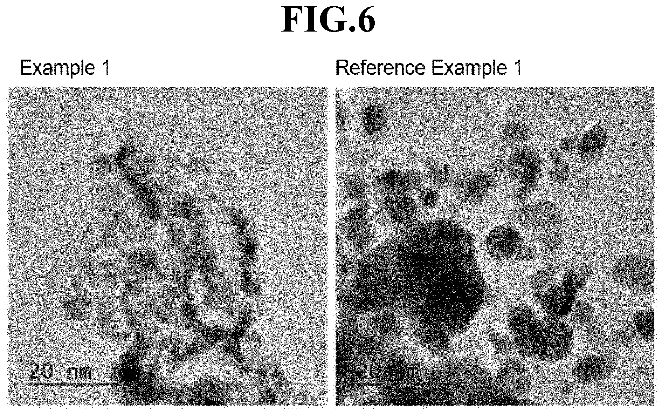

FIG. 6 shows transmission electron microscope (TEM) images of the catalyst for a fuel cell according to Example 1 and Reference Example 1.

Referring to FIG. 6, the catalyst for a fuel cell according to Example 1 shows metal catalyst particles of a uniform size on the surface of the first composite, whereas the catalyst for a fuel cell according to Reference Example 1 shows not only metal catalyst particles of various sizes, but also a nitrogen-containing protective layer (a g-$C_3N_4$ layer) is formed in an irregular and bulky form. In the catalyst for a fuel cell, the standard deviation can be obtained by measuring the thickness of the nitrogen-containing protective layer at 50 or more locations using a plurality of TEM images analyzed at the same magnification, and calculating the difference in average thickness of the nitrogen-containing protective layer. That is, since the standard deviation of Example 1 is 12.8 and the standard deviation of Reference Example 1 is 40.2, it can be confirmed that the standard deviation of Example 1 is lower than that of Reference Example 1.

Upon comprehensive interpretation of Experimental Examples 1 and 2, it can be seen that when a catalyst for a fuel cell is prepared by one heat treatment step without dividing the heat treatment step, not only the shape of the nitrogen-containing protective layer becomes irregular and bulky, but also the particle size of the metal catalyst varies. Therefore, it can be inferred that by preparing the catalyst by way of dividing the heat treatment step into at least two or more steps, a regular and uniform nitrogen-containing protective layer can be formed and the size of the metal catalyst particles becomes uniform.

**[Preparation Example 2: Preparation of membrane-electrode assembly]**

A membrane-electrode assembly was prepared by directly coating the catalyst layer according to Preparation Example 1 on a polymer electrolyte membrane (Nafion D-521). The membrane-electrode assembly was prepared by a conventional method.

**[Experimental Example 3: Evaluation of performance of membrane-electrode assembly (MEA)]**

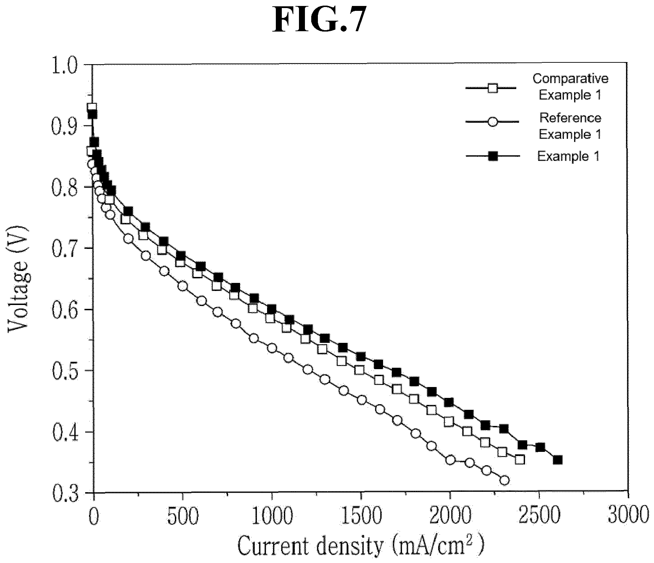

FIG. 7 shows evaluation of performance of the membrane-electrode assemblies according to Comparative Example 1, Reference Example 1, and Example 1.

Specifically, output performance was evaluated through measurement of current density (mA/cm$^2$)-voltage (V) of the membrane-electrode assembly under 80°C and 50% RH conditions. Specifically, in order to confirm the output performance under actual operating conditions of the fuel cell, a fuel cell unit cell evaluation device (Scribner 850 fuel cell test system) was used for the membrane-electrode assembly.

Referring to FIG. 7, it can be seen that contrary to Comparative Example 1 in which a nitrogen-containing protective layer was not formed on the surface of the first composite and Reference Example 1 in which a nitrogen-containing protective layer (a g-$C_3N_4$ layer) was formed in an irregular and bulky form, in Example 1, the membrane-electrode assembly showed the best performance because the nitrogen-containing protective layer was uniformly coated and the size of the metal catalyst particles was uniform.

**[Experimental Example 4: Evaluation of catalyst durability of membrane-electrode assembly]**

The catalyst durability of the membrane-electrode assembly according to Preparation Example 2 was evaluated based on the durability test protocol of the U. S. Department of Energy (DOE). Specifically, voltage cycling (50 mV/s, 10,000 cycles) was performed in the 0.6 V to 1.0 V section at a scan rate of 50 mV/s so as to evaluate the catalyst durability of the membrane-electrode assembly under 80°C and $H_2/N_2$ conditions, followed by measurement of voltage loss, respectively, and the measured values are shown in Table 1 below.

[Table 1]

| Sample | Comparative Example 1 | Reference Example 1 | Example 1 |
|---|---|---|---|
| Voltage loss (mV) | 39 mV | 36 mV | 15 mV |

Referring to Table 1, it can be seen that, compared to Comparative Example 1 and Reference Example 1, Example 1 showed the smallest voltage loss. Through the above results, it can be inferred that the durability of the catalyst layer according to Example 1 is significantly improved.

Although the preferred embodiments of the present disclosure have been described in detail above, the scope of the present disclosure is not limited thereto, and various modifications and improvements by those skilled in the art using the basic concept of the present disclosure defined in the following claims also belong to the scope of the rights of the present disclosure.

**Claims**

1. A catalyst for a fuel cell, comprising:

   a second composite in which a plurality of first composites comprising a support and metal catalyst particles supported on the support, are aggregated; and
   a nitrogen-containing protective layer coated on the surface of the second composite.

2. The catalyst for a fuel cell of claim 1, wherein the nitrogen-containing protective layer is derived from a nitrogen precursor.

3. The catalyst for a fuel cell of claim 1, wherein the nitrogen precursor is any one selected from the group consisting of cyanamide, urea, melamine, 2-cyanoguanidine, and a combination thereof.

4. The catalyst for a fuel cell of claim 1, wherein a thickness of the nitrogen-containing protective layer is 5 nm to 70 nm.

5. The catalyst for a fuel cell of claim 1, wherein the nitrogen-containing protective layer comprises graphitic carbon nitride.

6. The catalyst for a fuel cell of claim 1, wherein the nitrogen-containing protective layer is prepared using any one selected from the group consisting of a ball mill, a powder mixer, a resonant acoustic mixer (RAM), and a combination thereof.

7. A method for preparing a catalyst for a fuel cell, comprising:

   (S1) preparing a first mixture by adding a first composite and a nitrogen precursor to a reaction container and stirring them; and
   (S2) heat-treating the stirred first mixture,
   wherein the first composite comprises a support and metal catalyst particles supported on the support.

8. The method of claim 7,
   wherein the step (S1) is a step where any one selected from the group consisting of a ball mill, a powder mixer, a resonant acoustic mixer (RAM), and a combination thereof is used.

9. The method of claim 7,

   wherein the step (S2) comprises a first heat treatment step; and
   a second heat treatment step, which is different from the first heat treatment step.

10. The method of claim 9,

    wherein the first heat treatment step is a step of heat treatment at 150°C to 250°C for 0.5 to 3 hours in a first non-reactive gas atmosphere; and
    the second heat treatment step is a step of heat treatment at 500°C to 600°C for 1 to 5 hours in a second non-reactive gas atmosphere.

11. The method of claim 10,
    wherein the first non-reactive gas and the second non-reactive gas are each independently any one selected from the group consisting of nitrogen, argon, helium, and a combination thereof.

12. The method of claim 7,
    wherein the content of the nitrogen precursor is 80 to 200 parts by weight based on 100 parts by weight of the support.

13. A catalyst layer comprising the catalyst for a fuel cell according to claim 1; and an ionomer.

**14.** A membrane-electrode assembly comprising:

a polymer electrolyte membrane; and
the catalyst layer according to claim 13 disposed on at least one surface of the polymer electrolyte membrane.

**15.** A fuel cell comprising the membrane-electrode assembly according to claim 14.

# FIG.1

# FIG.2

Precursors

Coating

# FIG.3

# FIG.4

# FIG.5

Example 1                      Reference Example 1

# FIG.6

Example 1

Reference Example 1

# FIG.7

## INTERNATIONAL SEARCH REPORT

| International application No. |
| --- |
| **PCT/KR2022/018650** |

**A. CLASSIFICATION OF SUBJECT MATTER**

**H01M 4/86**(2006.01)i; **H01M 8/1004**(2016.01)i; **H01M 8/10**(2006.01)i

According to International Patent Classification (IPC) or to both national classification and IPC

**B. FIELDS SEARCHED**

Minimum documentation searched (classification system followed by classification symbols)

H01M 4/86(2006.01); H01M 4/88(2006.01); H01M 4/90(2006.01); H01M 4/92(2006.01); H01M 8/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 연료 전지 (fuel cell), 촉매 (catalyst), 질소 (nitrogen), 보호층 (protective layer), 그 래피티가 카본나이트라이드 (graphitic carbon nitride), 공명음향혼합기 (resonant acoustic mixer, RAM)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2019-132281 A1 (KOLON INDUSTRIES, INC.) 04 July 2019 (2019-07-04)<br>  See abstract; paragraphs [0020], [0061], [0083], [0104], [0143], [0151]-[0161] and [0201]; claims 1-3; and figure 1. | 1-15 |
| Y | KR 10-2017-0054145 A (INDUSTRY-ACADEMIC COOPERATION FOUNDATION, YONSEI UNIVERSITY) 17 May 2017 (2017-05-17)<br>  See abstract; paragraphs [0030], [0034] and [0052]; and claim 1. | 1-15 |
| Y | LEE, I. H. et al. Polymeric graphitic carbon nitride nanosheet-coated amorphous carbon supports for enhanced fuel cell electrode performance and stability. Applied Catalysis B: Environmental. 2018, vol. 237, pp. 318-326.<br>  See abstract; and page 319, left column. | 5,9-11 |
| A | KR 10-2012-0028457 A (KOREA INSTITUTE OF INDUSTRIAL TECHNOLOGY) 23 March 2012 (2012-03-23)<br>  See entire document. | 1-15 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 March 2023** | **17 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/018650**

**C.    DOCUMENTS CONSIDERED TO BE RELEVANT**

| Category* | Citation of document, with indication, where appropriate, of the relevant passages | Relevant to claim No. |
|---|---|---|
| A | JP 2010-182635 A (TOYOTA MOTOR CORP.) 19 August 2010 (2010-08-19)<br>See entire document. | 1-15 |

Form PCT/ISA/210 (second sheet) (July 2022)

## INTERNATIONAL SEARCH REPORT
### Information on patent family members

International application No.

**PCT/KR2022/018650**

| Patent document cited in search report | | | Publication date (day/month/year) | Patent family member(s) | | | Publication date (day/month/year) |
|---|---|---|---|---|---|---|---|
| WO | 2019-132281 | A1 | 04 July 2019 | CN | 111527633 | A | 11 August 2020 |
| | | | | EP | 3734728 | A1 | 04 November 2020 |
| | | | | JP | 2021-506573 | A | 22 February 2021 |
| | | | | JP | 2022-003642 | A | 11 January 2022 |
| | | | | JP | 7221349 | B2 | 13 February 2023 |
| | | | | KR | 10-2019-0078489 | A | 04 July 2019 |
| | | | | KR | 10-2323487 | B1 | 10 November 2021 |
| | | | | TW | 201929304 | A | 16 July 2019 |
| | | | | TW | I713248 | B | 11 December 2020 |
| | | | | US | 2021-0020956 | A1 | 21 January 2021 |
| KR | 10-2017-0054145 | A | 17 May 2017 | KR | 10-1851831 | B1 | 24 April 2018 |
| KR | 10-2012-0028457 | A | 23 March 2012 | KR | 10-1150843 | B1 | 13 June 2012 |
| JP | 2010-182635 | A | 19 August 2010 | JP | 5375146 | B2 | 25 December 2013 |

Form PCT/ISA/210 (patent family annex) (July 2022)